# NEUE EUROPÄISCHE PATENTSCHRIFT

(11) **EP 1 524 350 B2**
(45) Veröffentlichungstag und Bekanntmachung des Hinweises auf die Entscheidung über den Einspruch: **17.04.2013**
(45) Hinweis auf die Patenterteilung: 09.04.2008
(21) Anmeldenummer: 03023432.2
(22) Anmeldetag: 17.10.2003
(51) Int. Cl.: D04H 13/00, B32B 5/26

(54) **Faserlaminat und Verfahren zur Herstellung eines Faserlaminates**
Fiber laminates and methods for producing them
Laminés à fibres et leurs procédés de fabrication

(43) Veröffentlichungstag der Anmeldung: 20.04.2005
(73) Patentinhaber: Reifenhäuser GmbH & Co. KG Maschinenfabrik, 53839 Troisdorf (DE)
(72) Erfinder: Sommer, Sebastian, 53844 Troisdorf (DE)
(74) Vertreter: Rohmann, Michael

(56) Entgegenhaltungen:
- EP-A- 0 373 974
- US-A- 5 223 329
- US-A1- 2002 168 910
- US-A1- 2003 034 115

## Beschreibung

Die Erfindung betrifft ein Verfahren zur Herstellung eines Faserlaminates. Das Faserlaminat findet insbesondere Anwendung als saugfähiges Reinigungstuch bzw. Wischtuch.

Aus der Praxis sind verschiedene Faserlaminate bekannt, die als Reinigungstuch eingesetzt werden können. Entsprechende Verfahren zur Herstellung sind ebenfalls bekannt. In der Regel werden zunächst zwei kalandrierte Spinnvliese hergestellt. Anschließend wird eine Faserschicht aus hydrophilen Fasern, vorzugsweise eine Zellulosefaserschicht, zwischen den beiden Spinnvliesen eingebracht. Daraufhin wird das Laminat aus diesen drei Schichten einer Wasserstrahlverfestigung unterzogen. Die beim Kalandrieren des Spinnvlieses entstandenen Verbindungspunkte (Kalanderpunkte) zwischen den Filamenten des Spinnvlieses können in der Regel bei der Wasserstrahlverfestigung nicht mehr gelöst bzw. geöffnet werden. Insoweit resultiert eine verhältnismäßig geschlossene Oberfläche des Faserlaminates. Diese geschlossene Oberfläche hat den Vorteil, dass sie gegenüber Abrasionen wenig empfindlich ist. Dieses bekannte Faserlaminat hat auch eine ausreichende Absorptionskapazität für Flüssigkeiten. Feststoffe, wie beispielsweise Hausstaub, können aber nur schlecht in die glatte geschlossene Oberfläche des Faserlaminates eingelagert werden. Bei Verwendung des Faserlaminates als Reinigungstuch wird dieser feste Schmutz gleichsam vor dem Tuch hergeschoben und wird nur wenig von der Oberfläche des Faserlaminates aufgenommen.

Man hat versucht, im Zuge der Wasserstrahlverfestigung die Oberfläche des Faserlaminates aufzuschließen bzw. zu strukturieren. Dazu wurde die Wasserstrahlverfestigung beispielsweise auf einer konturierten Unterlage durchgeführt. Bei dieser Behandlung konnte aber keine zufriedenstellende Öffnung der Spinnvliesoberfläche erreicht werden. Außerdem werden durch das Eindringen von Wasserstrahlen hydrophile Fasern in unerwünschter Weise aus dem Faserlaminat entfernt. Insoweit sind die bekannten Faserlaminate verbesserungsfähig.

Aus US 2002/0168910 A1 ist ein Laminat aus zwei Spinnvliesen bekannt, zwischen denen eine Faserschicht aus hydrophilen Fasern aufgenommen wird. Dieses Faserlaminat wird hydrodynamisch verfestigt. - In EP 0 373 974 A2 wird ein nonwoven-Produkt beschrieben, in das Prägedeformationen eingebracht werden. Das nonwoven-Produkt besteht aus einer Mischung von hydrophilen Fasern und synthetischen Stapelfasern, wobei diese Mischung mit den Prägedeformationen versehen wird.

Der Erfindung liegt das technische Problem zugrunde, ein Verfahren der eingangs genannten Art anzugeben, mit dem ein Faserlaminat herstellbar ist, das eine erhöhte Aufnahmefähigkeit auch für Feststoffe bzw. für festen Schmutz aufweist.

Zur Lösung dieses technischen Problems lehrt die Erfindung ein Verfahren nach Patentanspruch 1 - Bei den Prägedeformationen handelt es sich um plastische Verformungen der Faserlaminatoberfläche und somit um gleichsam bleibende Verformungen.

Der Begriff Faserlaminat meint im Rahmen der Erfindung ein Mehrschichtprodukt bzw. ein Laminat aus zumindest einer Faserschicht aus hydrophilen Fasern und zumindest einer Schicht aus Filamenten. Mit dem Begriff Filamente sind Endlosfasern gemeint, d. h. theoretisch unendlich lange Fäden, aus denen das Spinnvlies gebildet wird. Filamente meint im Rahmen der Erfindung insbesondere Filamente aus einem thermoplastischen Kunststoff.

Die Filamente des Spinnvlieses bestehen vorzugsweise aus einem Polyolefin oder aus einem Polyester. Nach einer Ausführungsform bestehen die Filamente des Spinnvlieses aus zumindest einem Kunststoff aus der Gruppe "Polyethylen, Polypropylen, Polyethylenterephthalat". Es können auch Mischungen von Filamenten aus verschiedenen Kunststoffen eingesetzt werden. Nach einer Ausführungsform der Erfindung besteht ein Spinnvlies aus Mehrkomponentenfasern bzw. Bikomponentenfasern. - Es liegt im Rahmen der Erfindung, dass es sich bei dem vorverfestigten Spinnvlies um ein vorverfestigtes und vordeformiertes Spinnvlies handelt.

Bei den hydrophilen Fasern handelt es sich um wasseraufnahmefähige Fasern. Als hydrophile Fasern können Fasern aus natürlicher und/oder umgewandelter Zellulose, wie beispielsweise Pulpfasern, eingesetzt werden. Die Faserschicht aus den hydrophilen Fasern bildet eine saugfähige Schicht des Faserlaminates. Nach einer Ausführungsform der Erfindung werden die hydrophilen Fasern mit Hilfe zumindest einer Karde und/oder mit zumindest einer Air-laid-Einrichtung auf das vorverfestigte Spinnvlies aufgebracht.

Die erfindungsgemäßen Prägedeformationen sind zumindest in ein Spinnvlies bzw. die zugehörige Spinnvliesoberfläche des Faserlaminates eingebracht. Erfindungsgemäß setzen sich die Prägedeformationen aber bis in die Faserschicht aus den hydrophilen Fasern fort. Nach einer besonderen Ausführungsform der Erfindung erstrecken sich die Prägedeformationen von der einen (oberen) Spinnvliesschicht durch die Faserschicht aus hydrophilen Fasern bis in die zweite (untere) Spinnvliesschicht. Das Faserlaminat weist dann also zweckmäßigerweise an der einen Laminatoberfläche Vertiefungen und an der anderen gegenüberliegenden Laminatoberfläche Erhöhungen auf, die die Prägedeformationen bilden. Nach einer Ausführungsform der Erfindung ist in der Oberfläche des Faserlaminates eine Vielzahl von punktförmigen Prägedeformationen vorgesehen. Dabei kann es sich um regelmäßig oder um regellos angeordnete punktförmige Prägedeformationen handeln. Nach einer anderen Ausführungsform der Erfindung sind in der Oberfläche des Faserlaminates linienförmige Prägedeformationen vorgesehen. Auch diese linienförmigen Prägedeformationen können regelmäßig oder aber auch regellos angeordnet sein. Nach einer Ausführungsform der Erfindung weist das Faserlaminat in der Oberfläche sowohl punktförmige Prägedeformationen als auch linienförmige Prägedeformationen auf. Wie oben bereits dargelegt, handelt es sich bei einer Prägedeformation um eine Erhöhung und/oder eine Vertiefung in der Laminat- bzw. Spinnvliesoberfläche. Eine solche Erhöhung bzw. Vertiefung weist Seitenflanken sowie ein Plateau mit entsprechender Plateauoberfläche auf. Es liegt im Rahmen der Erfindung, dass eine Vielzahl von Prägedeformationen bzw. von Vertiefungen und/oder Erhöhungen erzeugt wird, die jeweils eine relativ kleine Plateauoberfläche haben.

Zweckmäßigerweise beträgt die Prägetiefe (bzw. Prägehöhe) der Prägedeformationen 0,1 bis 5 mm, vorzugsweise 0,3 bis 4 mm, bevorzugt 0,4 bis 3,5 mm und sehr bevorzugt 0,5 bis 3 mm. Prägetiefe bzw. Prägehöhe meint hier also den Abstand des Plateaus einer Prägedeformation von der Spinnvliesoberfläche. Die Prägetiefe bzw. Prägehöhe ist nach einer Ausführungsform der Erfindung über die gesamte Spinnvliesoberfläche konstant oder im Wesentlichen konstant. Nach einer anderen Ausführungsform der Erfindung sind über die Spinnvliesoberfläche Prägedeformationen unterschiedlicher Prägetiefe bzw. Prägehöhe verteilt.

Es liegt im Rahmen der Erfindung, dass die Faserschicht aus hydrophilen Fasern zwischen zwei Spinnvliesen bzw. Spinnvlieslagen angeordnet ist. Zweckmäßigerweise wird also auf die auf das erste vorverfestigte Spinnvlies aufgebrachte Faserschicht aus hydrophilen Fasern ein zweites Spinnvlies bzw. ein zweites vorverfestigtes Spinnvlies aufgebracht. Nach einer Ausführungsform der Erfindung sind die Prägedeformationen nur in der Oberfläche des einen Spinnvlieses ausgebildet. Nach einer bevorzugten Ausführungsform der Erfindung sind Prägedeformationen in den Oberflächen beider Spinnvliese vorgesehen.

Es liegt im Rahmen der Erfindung, dass ein zweites vorverfestigtes Spinnvlies auf der Faserschicht aus den hydrophilen Fasern aufgebracht wird, und dass das resultierende Faserlaminat anschließend hydrodynamisch verfestigt wird. Zweckmäßigerweise befindet sich die Faserschicht aus den hydrophilen Fasern also zwischen zwei Spinnvliesen bzw. Spinnvlieslagen.

Nach bevorzugter Ausführungsform der Erfindung wird die Vorverfestigung des zumindest einen Spinnvlieses mit einem Kalander, insbesondere mit einem Heißprägekalander, durchgeführt.

Es liegt im Rahmen der Erfindung, dass das Faserlaminat aus dem Spinnvlies bzw. aus den Spinnvliesen und der Faserschicht durch Wasserstrahlbehandlung hydrodynamisch verfestigt wird. Bei einer solchen Wasserstrahlverfestigung bzw. Wasserstrahlvernadelung verfestigen feine, sehr schnelle Wasserstrahlen bzw. Hochdruckwasserstrahlen das Faserlaminat bzw. den Vliesstoff.

Erfindungsgemäß wird das Faserlaminat nach der hydrodynamischen Verfestigung getrocknet. Diese Trocknung des Faserlaminates findet in zumindest einem Trockner statt, der beispielsweise als Trommeltrockner ausgebildet ist. Nach einer Ausführungsform der Erfindung werden die Prägedeformationen nach der hydrodynamischen Verfestigung und vor der Trocknung des Faserlaminates in die Faserlaminatoberfläche,eingebracht. Mit anderen Worten werden die Prägedeformationen in dem noch feuchten Faserlaminat erzeugt. Nach einer anderen Ausführungsform der Erfindung können die Prägedeformationen während des Trocknens bzw. im Trockner eingebracht werden. So kann die Erzeugung der Prägedeformationen beispielsweise zwischen zwei Trocknungstrommeln in einem teilgetrockneten Zustand des Faserlaminates stattfinden.

Je nach dem Zeitpunkt des Einbringens der Prägedeformationen (d. h. vor oder während der Trocknung) ist die Temperatur und auch die Feuchte bzw. Restfeuchte des Faserlaminates unterschiedlich. Dadurch ändern sich die Reibwerte zwischen den Fasern bzw. Filamenten. Es liegt im Rahmen der Erfindung, dass das erfindungsgemäße Verfahren bzw. die Erzeugung der Prägedeformationen mit der Maßgabe durchgeführt wird, dass die Faserlaminatoberfläche bzw. die Spinnvliesoberfläche plastisch verformt wird. Die Prägedeformationen sollen auch nach einem Gebrauch des Faserlaminates als angefeuchtetes Reinigungstuch erhalten bleiben.

Es liegt im Rahmen der Erfindung, dass in das Faserlaminat bzw. in ein Spinnvlies Bindemittel wie beispielsweise Latex, eingebracht werden und/oder dass Bindefasern aus einem niedrig schmelzenden Thermoplasten, wie beispielsweise Polyethylen, zugemischt sind. Es liegt dann fernerhin im Rahmen der Erfindung, dass nach der Erzeugung der Prägedeformationen eine Aktivierung bzw. thermische Aktivierung des Bindemittels und/oder der Bindefasern erfolgt, um die bei der Prägedeformation erzielte Struktur zu stabilisieren. Wenn für diese Aktivierung eine Erhitzung auf höhere Temperaturen, beispielsweise eine Erhitzung auf 100 °C oder mehr erforderlich ist, wird das Einbringen der Prägedeformationen vor oder während der Trocknung durchgeführt. Auf diese Weise wird ein zweimaliges bzw. mehrmaliges Aufheizen des Faserlaminates vermieden.

Nach einer Ausführungsform der Erfindung erfolgt die Prägedeformation des Faserlaminates während der Trocknung, zweckmäßigerweise im Trockner und in halbgetrocknetem Zustand des Faserlaminates. Bei dieser Ausführungsform wird die Wärme des Trocknungsvorganges zum Vorheizen des Faserlaminates genutzt und dadurch ist eine effektive Deformation der Vliesschichten möglich. Wenn die noch feuchten hydrophilen Fasern bei der Prägedeformation mit verformt werden, sinkt die Gefahr von Anrissen. Beim anschließenden Fertigtrocknen der hydrophilen Fasern wird die geprägte Struktur des Reinigungstuches dann gleichsam eingefroren.

Es liegt im Rahmen der Erfindung, dass die Prägedeformationen mit einer Prägeeinrichtung mit zumindest einer strukturierten Prägeoberfläche erzeugt werden. Vorzugsweise werden die Prägedeformationen mit einer auf der einen Seite des Faserlaminates einwirkenden strukturierten härteren Prägeoberfläche und mit einer auf der anderen Seite des Faserlaminates angeordneten weicheren Prägeoberfläche erzeugt. Die strukturierte härtere Prägeoberfläche greift dabei gleichsam in das Faserlaminat ein und wird in die weichere Prägeoberfläche hineingedrückt. Dann weist eine Seite des Faserlaminates Vertiefungen auf, während die andere Seite des Faserlaminates Erhöhungen aufweist.

Nach einer Ausführungsform der Erfindung findet das Einbringen der Prägedeformationen in das Faserlaminat zwischen zwei Walzen statt, wobei zumindest eine der beiden Walzen eine strukturierte Oberfläche aufweist. Strukturierte Oberfläche bzw. strukturierte Prägeoberfläche meint im Rahmen der Erfindung insbesondere eine Oberfläche, aus der Prägeelemente herausragen, die vorzugsweise als Noppen und/oder Stege ausgebildet sind. Die Prägedeformationen werden also zweckmäßigerweise mit zumindest einer auf das Faserlaminat einwirkenden Walze mit strukturierter Prägeoberfläche erzeugt. Vorzugsweise handelt es sich bei der Walze mit der strukturierten Prägeoberfläche um eine Stahlwalze. Nach einer bevorzugten Ausführungsform wird das Faserlaminat zwischen zwei Walzen hindurchgeführt, wobei die erste Walze eine Stahlwalze mit strukturierter Prägeoberfläche ist und die zweite Walze eine Walze mit weicherer Oberfläche, vorzugsweise mit einer Gummioberfläche, ist. Die strukturierte Prägeoberfläche der Stahlwalze wird dabei gleichsam in die Gummioberfläche der zweiten Walze eingedrückt.

Nach einer anderen Ausführungsform der Erfindung wird das Faserlaminat zwischen zwei Walzen aus Metall, vorzugsweise zwischen zwei Stahlwalzen hindurchgeführt. Dabei sind die Walzen bevorzugt so ausgebildet, dass die Prägeelemente bzw. Prägeerhöhungen in entsprechende Prägevertiefungen der anderen Walze eingreifen bzw. eintauchen. Zweckmäßigerweise weist jede der beiden Walzen Prägeerhöhungen und Prägevertiefungen auf. Den Prägeerhöhungen der einen Walze sind komplementäre Prägevertiefungen der anderen Walze zugeordnet. Ein mit dieser Prägeeinrichtung hergestelltes Faserlaminat weist dann Erhöhungen und Vertiefungen an jeder Seite auf.

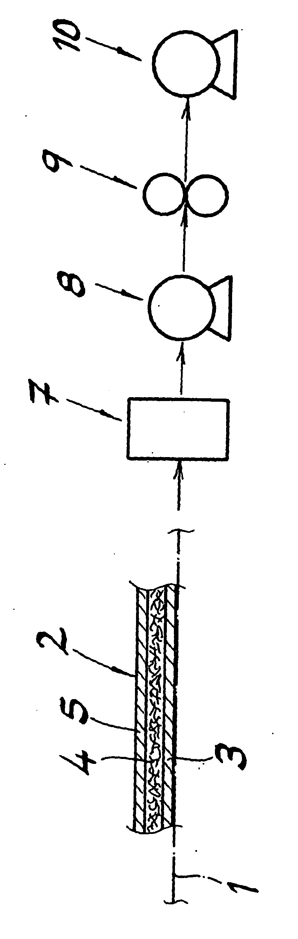

Nachfolgend wird die Erfindung anhand einer lediglich ein Ausführungsbeispiel darstellenden Zeichnung näher erläutert. Die einzige Figur zeigt in schematischer Darstellung eine Vorrichtung zur Durchführung des erfindungsgemäßen Verfahrens.

Auf einem Förderband, beispielsweise einem Ablegesiebband 1, wird ein Faserlaminat 2 in Richtung der Pfeile befördert. Das Faserlaminat 2 besteht aus einem unmittelbar auf dem Ablegesiebband 1 aufliegenden ersten Spinnvlies 3, einer darauf angeordneten Faserschicht 4 aus hydrophilen Fasern und einem auf der Faserschicht 4 angeordneten zweiten Spinnvlies 5. Das Faserlaminat 2 kann nach einer Ausführungsform der Erfindung online hergestellt werden, in dem zuerst die Filamente des ersten Spinnvlieses 3 auf dem Ablegesiebband 1 abgelegt werden und dann anschließend die Faserschicht 4 aufgebracht wird und daraufhin das zweite Spinnvlies 5 auf die Faserschicht 4 aufgelegt wird. Nach einer bevorzugten Ausführungsform der Erfindung wird aber offline gearbeitet. Das Faserlaminat 2 wird aus bereits vorher hergestellten und vorverfestigten Spinnvliesen 3, 5 gebildet und dazu werden die Spinnvliese 3, 5 mit der Faserschicht 4 kombiniert.

Das resultierende Faserlaminat 2 wird anschließend in einer Verfestigungsstation 7 hydrodynamisch verfestigt. Daraufhin wird das verfestigte Faserlaminat 2 einer Trocknung unterworfen und dazu zunächst in eine erste Trocknungsstufe 8 eingeführt, bei der es sich beispielsweise um eine Trocknungstrommel handeln kann. Im Anschluss daran wird das Faserlaminat 2 einer Prägedeformation in einer Prägeeinrichtung 9 im noch nicht vollständig getrockneten bzw. im halbfeuchten Zustand unterzogen. Die Prägeeinrichtung 9 mag aus einer strukturierten Stahlwalze bestehen, die in eine gegenüberliegende Gummiwalze eingreift. Das Faserlaminat 2 wird dabei zwischen den beiden Walzen hindurchgeführt. Nach der Prägedeformation wird das Faserlaminat 2 in eine zweite Trocknungsstufe 10 eingeführt, die beispielsweise ebenfalls aus einer Trocknungstrommel besteht. Hier wird das Faserlaminat 2 zweckmäßigerweise fertig getrocknet.

Der Erfindung liegt die Erkenntnis zugrunde, dass das erfindungsgemäß hergestellte Faserlaminat eine überraschend erhöhte Fähigkeit zur Feststoffabsorption aufweist. Feste Schmutzteilchen, beispielsweise Staubteilchen, können problemlos mit einem als Reinigungstuch eingesetzten Faserlaminat aufgenommen werden. Hervorzuheben ist fernerhin, dass das Faserlaminat auf einfache und wenig aufwendige Weise mit dem erfindungsgemäßen Verfahren hergestellt werden kann. Durch Einbringen der Prägedeformationen in das Faserlaminat kann zusätzlich ein ansprechendes äußeres Erscheinungsbild bzw. Design eines Reinigungstuches erreicht werden. Die Prägedeformationen können dazu auf verschiedenste Weise variiert und kombiniert werden. Im Ergebnis erhält man ein optisch sehr ansprechendes Produkt.

## Patentansprüche

1. Verfahren zur Herstellung eines Faserlaminates, insbesondere eines saugfähigen Reinigungstuches,
wobei zumindest ein Spinnvlies aus Filamenten durch Kalandrieren vorverfestigt wird,
wobei auf das vorverfestigte Spinnvlies zumindest eine Faserschicht aus hydrophilen Fasern aufgebracht wird,
wobei das Laminat aus Spinnvlies und Faserschicht hydrodynamisch verfestigt wird,
wobei das Faserlaminat nach der hydrodynamischen Verfestigung getrocknet wird,
wobei in die Oberfläche des hydrodynamisch verfestigten Faserlaminates Prägedeformationen als plastische Verformungen in Form von Vertiefungen eingebracht werden,
wobei die Prägedeformationen in die Spinnvliesoberfläche des Faserlaminates eingebracht werden und wobei sich diese Prägedeformationen bis in die Faserschicht aus hydrophilen Fasern fortsetzen
und wobei die Prägedeformationen nach der hydrodynamischen Verfestigung und vor der Trocknung des Faserlaminates in die Faserlaminatoberfläche eingebracht werden oder wobei die Prägedeformationen während des Trocknens des Faserlaminates in die Faserlaminatoberfläche eingebracht werden.

2. Verfahren nach Anspruch 1, wobei die Vorverfestigung des zumindest einen Spinnvlieses (3, 5) mit einem Heißprägekalander durchgeführt wird.

3. Verfahren nach einem der Ansprüche 1 oder 2, wobei ein zweites vorverfestigtes Spinnvlies (3, 5) auf der Faserschicht (4) aus den hydrophilen Fasern aufgebracht wird und wobei das resultierende Faserlaminat (2) anschließend hydrodynamisch verfestigt wird.

4. Verfahren nach einem der Ansprüche 1 bis 3, wobei das Faserlaminat (2) aus Spinnvlies (3, 5) bzw. Spinnvliesen (3, 5) und Faserschicht (4) durch Wasserstrahlbehandlung hydrodynamisch verfestigt wird.

5. Verfahren nach einem der Ansprüche 1 bis 4, wobei die Prägedeformationen mit einer Prägeeinrichtung (9) mit zumindest einer strukturierten Prägeoberfläche erzeugt werden.

6. Verfahren nach einem der Ansprüche 1 bis 5, wobei die Prägedeformationen mit einer auf der einen Seite des Faserlaminates (2) einwirkenden strukturierten härteren Prägeoberfläche und mit einer auf der anderen Seite des Faserlaminates (2) angeordneten weiteren Prägeoberfläche erzeugt werden.

7. Verfahren nach einem der Ansprüche 1 bis 6, wobei die Prägedeformationen mit zumindest einer auf das Faserlaminat (2) einwirkenden Walze mit strukturierter Prägeoberfläche erzeugt werden.

8. Verfahren nach einem der Ansprüche 1 bis 7, wobei die Prägedeformationen mit zumindest einer auf das Faserlaminat (2) einwirkenden Walze mit strukturierter Prägeoberfläche erzeugt werden.

## Claims

1. A method of producing a fibre laminate, in particular an absorbent cleaning cloth,
wherein at least one spun-bond web comprising filaments is pre-consolidated by calendering,
wherein at least one fibre layer of hydrophilic fibres is applied to the pre-consolidated spun-bond web,
wherein the laminate made of spun-bond web and fibre layer is hydrodynamically consolidated,
wherein the fibre laminate is dried after the hydrodynamic consolidation,
wherein embossing deformations as plastic deformations in the form of recesses are incorporated into the surface of the hydrodynamically consolidated fibre laminate,
wherein the embossing deformations are incorporated into the spun-bond web surface of the fibre laminate and wherein these embossing deformations continue into the fibre layer made of the hydrophilic fibres
and wherein the embossing deformations are incorporated into the fibre laminate surface after the hydrodynamic consolidation and before the drying of the fibre laminate or wherein the embossing deformations are incorporated into the fibre laminate surface during the drying of the fibre laminate.

2. The method according to claim 1, wherein the pre-consolidation of the at least one spun-bond web (3, 5) is carried out using a hot-embossing calender.

3. The method according to any one of claims 1 or 2, wherein a second pre-consolidated spun-bond web (3, 5) is applied to the fibre layer (4) of hydrophilic fibres and wherein the resulting fibre laminate (2) is then consolidated hydrodynamically.

4. The method according to any one of claims 1 to 3, wherein the fibre laminate (2) made of spun-bond webs (3, 5) or spun-bond webs (3, 5) and fibre layer (4) is hydrodynamically consolidated by water-jet treatment.

5. The method according to any one of claims 1 to 4, wherein the embossing deformations are produced using an embossing device (9) with at least one structured embossing surface.

6. The method according to any one of claims 1 to 5, wherein the embossing deformations are produced with a structured harder embossing surfaces acting on one side of the fibre laminate (2) and a further embossing surface arranged on the other side of the fibre laminate (2).

7. The method according to any one of claims 1 to 6, wherein the embossing deformations are produced using at least one roller with a structured embossing surface acting on the fibre laminate (2).

8. The method according to any one of claims 1 to 7, wherein the embossing deformations are produced using at least one roller with a structured embossing surface acting on the fibre laminate (2).

## Revendications

1. Procédé de fabrication d'un laminé fibreux, en particulier d'un chiffon nettoyant absorbant, dans lequel
au moins un filé-lié est pré-consolidé par calandrage,
sur le filé-lié pré-consolidé, au moins une couche fibreuse en fibres hydrophiles est appliquée,
le laminé en fil-lié et la couche fibreuse sont consolidés hydrodynamiquement,
le laminé fibreux est séché après la consolidation hydrodynamique,
des déformations de gaufrage créant des déformations plastiques creux sont pratiquées sous forme de creux dans la surface du laminé fibreux consolidé hydrodynamiquement,
les déformations de gaufrage sont pratiquées dans la surface filée-liée du laminé fibreux et ces déformations de gaufrage se continuent jusque dans la couche fibreuse en fibres hydrophiles
les déformations de gaufrage sont pratiquées après la consolidation hydrodynamique et avant le séchage du laminé fibreux dans la surface fibreuse laminée ou les déformations de gaufrage sont pratiquées pendant le séchage du laminé fibreux dans la surface fibreuse laminée.

2. Procédé selon la revendication 1, dans lequel la pré-consolidation de l'au moins un filé-lié (3, 5) est réalisée avec une calandre de gaufrage à chaud.

3. Procédé selon une des revendications 1 ou 2, dans lequel un second filé-lié (3, 5) est appliqué sur la couche fibreuse (4) faite de fibres hydrophiles et le laminé fibreux en résultant (2) est ensuite consolidé hydrodynamiquement.

4. Procédé selon une des revendications 1 à 3, dans lequel le laminé fibreux (2) en filé-lié (3, 5) ou filés-liés (3, 5) et la couche fibreuse (4) sont consolidés hydrodynamiquement par traitement au jet d'eau.

5. Procédé selon une des revendications 1 à 4, dans lequel les déformations de gaufrage sont créées à l'aide d'un dispositif de gaufrage (9) comportant au moins une surface de gaufrage structurée.

6. Procédé selon une des revendications 1 à 5, dans lequel les déformations de gaufrage sont créées par une surface de gaufrage structurée plus dure agissant sur une face du laminé fibreux (2) et par une autre surface de gaufrage disposée sur l'autre face du laminé fibreux (2).

7. Procédé selon une des revendications 1 à 6, dans lequel les déformations par gaufrage sont créées à l'aide d'au moins un cylindre agissant sur le laminé fibreux (2) par une surface de gaufrage structurée.

8. Procédé selon une des revendications 1 à 7, dans lequel les déformations de gaufrage sont créées à l'aide d'au moins un cylindre agissant sur le laminé fibreux (2) par une surface de gaufrage structurée.
